(19) Europäisches Patentamt

European Patent Office

Office européen des brevets

(11) **EP 1 524 534 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
***G01S 17/36*** *(2006.01)*

(21) Anmeldenummer: **04023735.6**

(22) Anmeldetag: **06.10.2004**

(54) **Optischer Sensor**

Optical sensor

Capteur optique

(84) Benannte Vertragsstaaten:
**BE CH DE ES FR GB IT LI NL**

(30) Priorität: **16.10.2003 DE 10348104**

(43) Veröffentlichungstag der Anmeldung:
**20.04.2005 Patentblatt 2005/16**

(73) Patentinhaber: **Leuze electronic GmbH + Co KG**
**73277 Owen/Teck (DE)**

(72) Erfinder:
• **Hofgärtner, Gerhard**
**72622 Nürtingen (DE)**
• **Haag, Roland**
**73278 Schlierbach (DE)**
• **Patz, Jürgen**
**72660 Beuren (DE)**
• **Klass, Dieter**
**72660 Beuren (DE)**

(74) Vertreter: **Ruckh, Rainer Gerhard**
**Fabrikstrasse 18**
**73277 Owen/Teck (DE)**

(56) Entgegenhaltungen:
**EP-A- 0 475 326     DE-A1- 19 811 550**

**Beschreibung**

Die Erfindung betrifft einen optischen Sensor.

Derartige optische Sensoren dienen zur Bestimmung von Distanzen von Objekten in einem Überwachungsbereich. Die Distanzbestimmung erfolgt dabei nach der Phasendifferenzmethode. Der optische Sensor weist hierzu einen Sendelichtstrahlen emittierenden Sender und einen Empfangslichtstrahlen empfangenden Empfänger auf. Zur Durchführung der Phasenmessung wird im einfachsten Fall den Sendelichtstrahlen eine Amplitudenmodulation mit einer einzelnen Frequenz aufgeprägt. Die von einem Objekt reflektierten Empfangslichtstrahlen weisen eine entsprechende Amplitudenmodulation auf, jedoch ist diese entsprechend der Lichtlaufzeit von dem optischen Sensor zum Objekt und zurück zum optischen Sensor phasenversetzt zur Amplitudenmodulation der Sendelichtstrahlen. In einer Signalverarbeitungseinheit wird die Phasendifferenz der Sendelichtstrahlen und der Empfangslichtstrahlen bestimmt. Aus dieser Phasendifferenz wird dann die Distanz des Objektes zum optischen Sensor berechnet.

Aus der DE 198 11 550 A1 ist ein derartiger nach der Phasendifferenzmethode arbeitender optischer Sensor bekannt. Dieser optische Sensor weist eine aus digitalen Schaltungskomponenten bestehende Schaltungsanordnung zur Erzeugung von Frequenzsignalen auf, die zur Durchführung der Phasenmessung benötigt werden.

Dabei umfasst die Schaltungsanordnung einen eine Grundfrequenz $f_0$ generierenden Oszillator. Dieser ist an zwei Logikeinheiten angeschlossen, die jeweils im Wesentlichen aus einem Teiler, einem Filter und einem Verstärker bestehen.

In einem ersten Teiler wird durch Teilen der Grundfrequenz $f_0$ eine Frequenz $f_1$ generiert, die als Taktsignal dem Empfänger zugeführt wird, welcher von einer Avalanche-Photodiode gebildet ist.

In einem zweiten Teiler wird durch Teilen der Grundfrequenz $f_0$ eine Frequenz $f_1'$ erzeugt, welche $f_1' = f_1 - \Delta f$ beträgt. Mit dieser Frequenz $f_1'$ werden die Sendelichtstrahlen des Senders amplitudenmoduliert.

Die Frequenzen $f_1$ und $f_1'$ liegen typischerweise im MHz-Bereich, während die Differenzfrequenz $\Delta f$, um welche sich die Frequenzen $f_1$ und $f_1'$ unterscheiden, typischerweise im kHz-Bereich liegt.

Die Frequenz $f_1'$ wird aus der Frequenz $f_1$ abgeleitet, in dem das Frequenzsignal $f_1$ mit einer vorgegebenen Taktfrequenz zwischen diskreten Phasenlagen, die durch Flanken des Frequenzsignals mit der Grundfrequenz $f_0$ bestimmt sind, weiter geschaltet wird.

In dem Empfänger erfolgt eine Mischung der Frequenzsignale $f_1$, $f_1'$ dadurch, dass die mit der Frequenz $f_1'$ amplitudenmodulierten, durch die Empfangslichtstrahlen generierten Empfangssignale mit der Taktfrequenz $f_1$ überlagert werden.

Das dadurch am Ausgang des Empfängers generierte periodische Ausgangssignal mit der Frequenz $\Delta f$ enthält die Phasenverschiebung zwischen den Sendelichtstrahlen und den Empfangslichtstrahlen und damit die Information über die zu bestimmende Objektdistanz.

Zur Bestimmung der Phasendifferenz wird das Ausgangssignal mit einer bestimmten Abtastfrequenz $f_A$ abgetastet. Hierzu ist ein Mikroprozessor vorgesehen, welcher einen Analog-Digital-Wandler mit der Abtastfrequenz $f_A$ ansteuert. Die dabei generierten Abtastwerte werden in dem Mikroprozessor zur Ermittlung der Objektdistanz ausgewertet.

Die mit dem Sender und Empfänger durchgeführten Distanzmessungen werden jeweils auf eine Referenzmessung bezogen, wobei hierzu die Sendelichtstrahlen über eine Referenzstrecke zum Empfänger geführt sind.

Ein wesentlicher Vorteil des optischen Sensors gemäß der DE 198 11 550 A1 besteht darin, dass die einzelnen Frequenzsignale aus einem einzigen Oszillator durch Teilen der Grundfrequenz $f_0$ dieses Oszillators digital abgeleitet werden. Dadurch wird eine genaue Distanzmessung ermöglicht.

Nachteilig hierbei ist jedoch der hohe konstruktive Aufwand des optischen Sensors zur Durchführung der Distanzmessung. Insbesondere erfordert die fortlaufend für jede Distanzmessung durchzuführende Referenzmessung einen unerwünscht hohen Aufwand.

Der Erfindung liegt die Aufgabe zugrunde einen optischen Sensor der eingangs genannten Art derart weiterzubilden, dass mit diesem bei möglichst geringem konstruktiven Aufwand eine genaue Distanzbestimmung ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Bestimmung von Distanzen von Objekten innerhalb eines Überwachungsbereichs weist einen Sendelichtstrahlen emittierenden Sender und einer diesem zugeordneten ersten Logikeinheit zur Generierung wenigstens einer Frequenz $f_1'$ auf, mit welcher die Sendelichtstrahlen amplitudenmoduliert sind. Ebenso beinhaltet der erfindungsgemäße optische Sensor einen Empfangslichtstrahlen empfangenden Empfänger und einer diesem zugeordneten zweiten Logikeinheit zur Generierung wenigstens einer zweiten Frequenz $f_1$, welche bezüglich der Frequenz $f_1'$ um eine Differenzfrequenz $\Delta f$ verschoben ist. Diese zweite Frequenz $f_1$ ist als Taktsignal dem Empfänger zugeführt, so dass am Ausgang des Empfängers durch Mischen der Frequenzen $f_1$ und $f_1'$ ein periodisches Ausgangssignal mit der Differenzfrequenz $\Delta f$ und mit einer ein Maß für die Objektdistanz darstellenden Phasenverschiebung generiert wird. Weiterhin weist der erfindungsgemäße optische Sensor eine Abtasteinheit zur Abtastung des Ausgangssignals mit einer Abtastfrequenz $f_A$ auf. Ebenso beinhaltet der erfindungsgemäße optische Sensor eine Auswerteeinheit zur Berechnung der Objektdistanz aus der durch Abtastung des Ausgangssignals ermittelten Phasenverschiebung. Eine Triggereinheit dient zur Generierung eines Startsignals für die Logikeinheiten und die Abtasteinheiten, wobei mit dem Startsignal ein gemeinsamer zeitlicher Bezugspunkt für die Frequenzen $f_A$, $f_1$ und $f_1'$ generiert wird.

Ein wesentlicher Vorteil des erfindungsgemäßen optischen Sensors besteht darin, dass durch den gemeinsamen Bezug der Frequenzsignale der Logikeinheiten und der Abtasteinheiten eine fortlaufende Referenzmessung zur Referenzierung der einzelnen aktuell ermittelten Distanzwerte entfallen kann.

Um einen eindeutigen Referenzpunkt der in der Auswerteeinheit ermittelten Phasenverschiebungen zu der Objektdistanz herzustellen, braucht lediglich eine Kalibrierungsmessung mit dem optischen Sensor gegen ein vorgegebenes Referenzziel durchgeführt werden. Zweckmäßigerweise kann die Kalibrierungsmessung vor Inbetriebnahme des optischen Sensors durchgeführt werden. Zur Kompensation von Störeinflüssen wie zum Beispiel thermischem Driften von Bauelementen kann die Kalibrierungsmessung in größeren Zeitabständen wiederholt werden.

Da für die einzelnen Distanzmessungen bei dem erfindungsgemäßen optischen Sensor keine Referenzmessungen durchgeführt werden müssen, wird eine erhebliche Reduzierung des konstruktiven Aufwandes des optischen Sensors erzielt. Außerdem werden die Messzeiten des optischen Sensors bei der Distanzbestimmung erheblich verkürzt.

Die Erfindung wird im Nachstehenden anhand der Zeichnungen erläutert. Es zeigen:

Figur 1: Schematische Darstellung des erfindungsgemäßen optischen Sensors.

Figur 2: Blockschaltbild der Signalverarbeitungseinheit des optischen Sensors gemäß Figur 1.

Figur 3: Verlauf des in der Signalverarbeitungseinheit generierten sinusförmigen Ausgangssignals und eines Referenzsignals.

Figur 4: Schematische Darstellung der Ermittlung der Phasenverschiebung des Ausgangssignals gemäß Figur 3 aus einer Anzahl von Abtastwerten.

Figur 5: Zeitlicher Verlauf der in der Signalverarbeitungseinheit gemäß Figur 2 generierten Frequenzsignale.

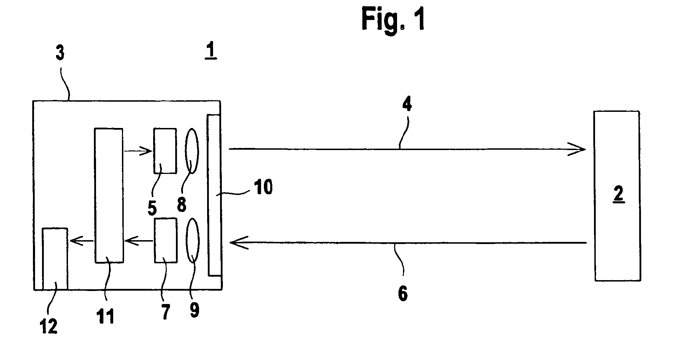

Figur 1 zeigt schematisch den Aufbau eines optischen Sensors 1 zur Bestimmung der Distanzen von Objekten 2 innerhalb eines Überwachungsbereichs. Der in einem Gehäuse 3 integrierte optische Sensor 1 weist einen Sendelichtstrahlen 4 emittierenden Sender 5 und einen Empfangslichtstrahlen 6 empfangenden Empfänger 7 auf. Der Sender 5 ist von einer Laserdiode, der Empfänger 7 von einer Avalanche-Photodiode gebildet. Dem Sender 5 ist zur Strahlformung eine Sendeoptik 8 nachgeordnet. Die Empfangslichtstrahlen 6 werden mittels einer Empfangsoptik 9 auf den Empfänger 7 geführt. Die Sendelichtstrahlen 4 werden durch ein Austrittsfenster 10 in der Frontwand des Gehäuses 3 in den Überwachungsbereich geführt und treffen auf ein Objekt 2. Die am Objekt 2 zurückreflektierten Empfangslichtstrahlen 6 werden durch das Austrittsfenster 10 zum Empfänger 7 geführt.

Die Distanzmessung erfolgt nach dem Phasenmessprinzip. Zur Durchführung der Distanzmessung ist in dem optischen Sensor 1 eine Signalverarbeitungseinheit 11 integriert. Mittels dieser wird den Sendelichtstrahlen 4 eine Amplitudenmodulation mit wenigstens einer Modulationsfrequenz aufgeprägt. Die vom Objekt 2 zum Empfänger 7 zurückreflektierten Empfangslichtstrahlen 6 weisen dieselbe Amplitudenmodulation auf, jedoch sind die am Empfänger 7 registrierten Empfangslichtstrahlen 6 bezüglich der vom Sender 5 emittierten Sendelichtstrahlen 4 um eine Phasenverschiebung $\varphi$ entsprechend der Lichtlaufzeit vom optischen Sensor 1 zum Objekt 2 phasenverschoben. Aus dieser Phasenverschiebung $\varphi$ erfolgt in der Signalverarbeitungseinheit 11 die Bestimmung der Objektdistanz. Die so ermittelten Distanzwerte werden über einen Ausgang 12 ausgegeben.

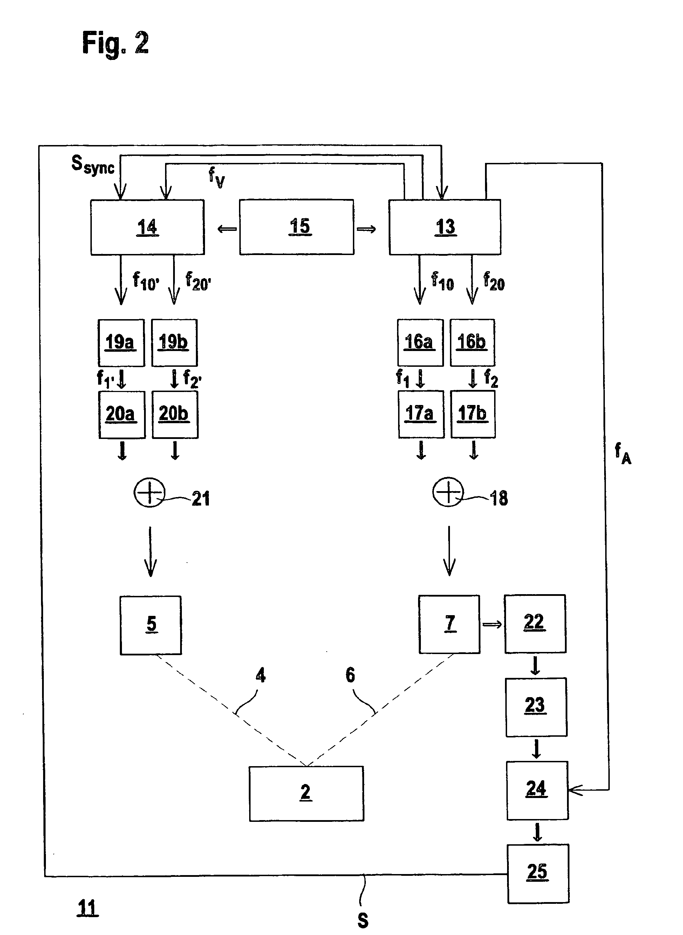

Figur 2 zeigt den Aufbau der Signalverarbeitungseinheit 11 des optischen Sensors 1 gemäß Figur 1. Die Signalverarbeitungseinheit 11 weist zwei aus digitalen Bauelementen gebildete Logikeinheiten auf, welche jeweils einen Teiler 13, 14 umfassen. Die Teiler 13, 14 sind an einen Oszillator 15 angeschlossen, der als Quarzoszillator ausgebildet ist. Mit dem Oszillator 15 wird ein Frequenzsignal mit der Grundfrequenz $f_0$ generiert.

Im vorliegenden Fall sind dem ersten Teiler 13 zwei Bandpassfilter 16a, 16b nachgeordnet, wobei jedem Bandpassfilter 16a, 16b ein Verstärker 17a, 17b nachgeordnet ist. Die Ausgänge der Verstärker 17a, 17b sind über ein erstes Summierglied 18 auf den Empfänger 7 des optischen Sensors 1 geführt.

Entsprechend sind dem zweiten Teiler 14 zwei Bandpassfilter 19a, 19b nachgeordnet, wobei jedem Bandpassfilter 19a, 19b ein Verstärker 20a, 20b nachgeordnet ist. Die Ausgänge der Verstärker 20a, 20b sind über ein zweites Summierglied 21 auf den Sender 5 des optischen Sensors 1 geführt.

In Abwandlung zur Ausführungsform gemäß Figur 2 können die Logikeinheiten auch eine Baueinheit bilden.

Die Ausgangssignale am Ausgang des Empfängers 7 werden über ein weiteres Bandpassfilter 22 und einen Verstärker 23 einem Analog-Digital-Wandler 24 zugeführt. Dieser ist an einen Mikroprozessor 25 angeschlossen, der eine Auswerteeinheit bildet, in welcher aus den Ausgangssignalen des Empfängers 7 die jeweilige Objektdistanz berechnet wird.

Zur Durchführung der Phasenmessung werden die Sendelichtstrahlen 4 des Senders 5 zyklisch nacheinander mit zwei Frequenzen $f_1$ und $f_2$' amplitudenmoduliert. Prinzipiell kann der Sender 5 auch nur mit einer Frequenz $f_1$' amplitudenmoduliert werden. Durch die Verwendung von zwei oder mehreren Frequenzen zur Modulation der Sendelichtstrahlen 4 kann der Eindeutigkeitsbereich der mit dem optischen Sensor 1 gemessenen Phasendifferenz zwischen Sendelichtstrahlen 4 und Empfangslichtstrahlen 6 und damit der erfassbare Distanzbereich erheblich gesteigert werden.

Sowohl die mittels des Teilers 13 und dessen nachgeordneten Komponenten der ersten Logikeinheit generierten Frequenzen $f_1$, $f_2$ als auch die mittels des Teilers 14 und dessen nachgeordneten Komponenten der zweiten Logikeinheit generierten Frequenzen $f_1$, $f_2$ sind von der Grundfrequenz $f_0$ des Oszillators 15 abgeleitet, so dass zwischen diesen eine fest vorgegebene Beziehung besteht.

In dem Teiler 13 werden durch Teilung der Frequenz nacheinander die Frequenzen $f_{10}$ und $f_{20}$ generiert. Die so erzeugte Frequenz $f_{10}$ sowie deren Oberschwingungen werden dem Bandpassfilter 16a zugeführt. Dort wird die Grundschwingung oder eine Oberschwingung der Frequenz $f_{10}$ ausgefiltert, so dass die am Ausgang des Bandfilters 16a anstehende Frequenz $f_1$ der Frequenz $f_{10}$ oder einem ganzzahligen Vielfachen hiervon entspricht. Entsprechend wird mittels des Bandpassfilters 16b aus der Frequenz $f_{20}$ die Frequenz $f_2$ gewonnen.

In entsprechender Weise werden durch Teilung der Grundfrequenz $f_0$ im Teiler 14 die Frequenzen $f_{10}$' und $f_{20}$' erzeugt, aus welchen in den Bandpassfiltern 19a, 19b die Frequenzen $f_1$' und $f_2$' gewonnen werden.

Dabei sind als erstes Frequenzpaar die Frequenzen $f_1$, $f_1$' gemäß der Beziehung $f_1$' = $f_1$ - $\Delta f$ um eine Differenzfrequenz $\Delta f$ gegeneinander verschoben. Entsprechend sind als zweites Frequenzpaar die Frequenzen $f_2$, $f_2$' gemäß der Beziehung $f_2$' = $f_2$ - $\Delta f$ um die Differenzfrequenz $\Delta f$ gegeneinander verschoben.

Die Frequenzverschiebung von $f_1$' beziehungsweise $f_2$' gegenüber $f_1$ beziehungsweise $f_2$ erfolgt auf digitalem Weg dadurch, dass eine durch Teilung der Grundfrequenz $f_0$ im Teiler 13 generierte Frequenz $f_v$ dem Teiler 14 zugeführt wird. Entsprechend dem in der DE 198 11 550 C2 beschriebenen Verfahren dient dieses Signal als Takt zur Weiterschaltung des Frequenzsignals $f_{10}$ beziehungsweise $f_{20}$ zwischen diskreten Phasenlagen, die durch Flanken des Frequenzsignals $f_0$ bestimmt sind, woraus dann die bezüglich um $\Delta f$ verschobenen, etwas niederfrequenten Frequenzsignale $f_{10}$', $f_{20}$' generiert werden.

Da die Frequenzen $f_{10}$, $f_{20}$ und über $f_v$ auch $f_{10}$' und $f_{20}$' jeweils einen festen Bezug zur Grundfrequenz $f_0$ aufweisen, weisen diese Frequenzen fest definierte, konstante Frequenzverhältnisse zueinander auf

Zur Durchführung einer ersten Distanzmessung werden die Sendelichtstrahlen 4 mit der Frequenz $f_1$' amplitudenmoduliert. Zeitgleich wird das Frequenzsignal $f_1$ als Takt dem Empfänger 7 zugeführt. Die vom Objekt 2 reflektierten Empfangslichtstrahlen 6 sind wie die Sendelichtstrahlen 4 mit der Frequenz $f_1$' amplitudenmoduliert. Durch die Lichtlaufzeit der Sendelichtstrahlen 4 beziehungsweise der Empfangslichtstrahlen 6 zwischen dem optischen Sensor 1 und dem Objekt 2 weisen die Empfangslichtstrahlen 6 eine Phasenverschiebung $\varphi$ auf. In dem Empfänger 7 erfolgt eine Mischung des Taktes mit der Frequenz $f_1$ und dem durch die Empfangslichtstrahlen 6 generierten Empfangssignal mit der Frequenz $f_1$', so dass das Ausgangssignal am Ausgang des Empfängers 7, welches die die Distanzinformation enthaltende Phasenverschiebung $\varphi$ aufweist, ein periodisches Signal mit der Differenzfrequenz $\Delta f$ ist.

Die zweite Distanzmessung erfolgt mit dem Frequenzpaar $f_2$, $f_2$', wobei auch hier ein die Phasenverschiebung $\varphi$ enthaltendes periodisches Ausgangssignal mit der Differenzfrequenz $\Delta f$ erhalten wird.

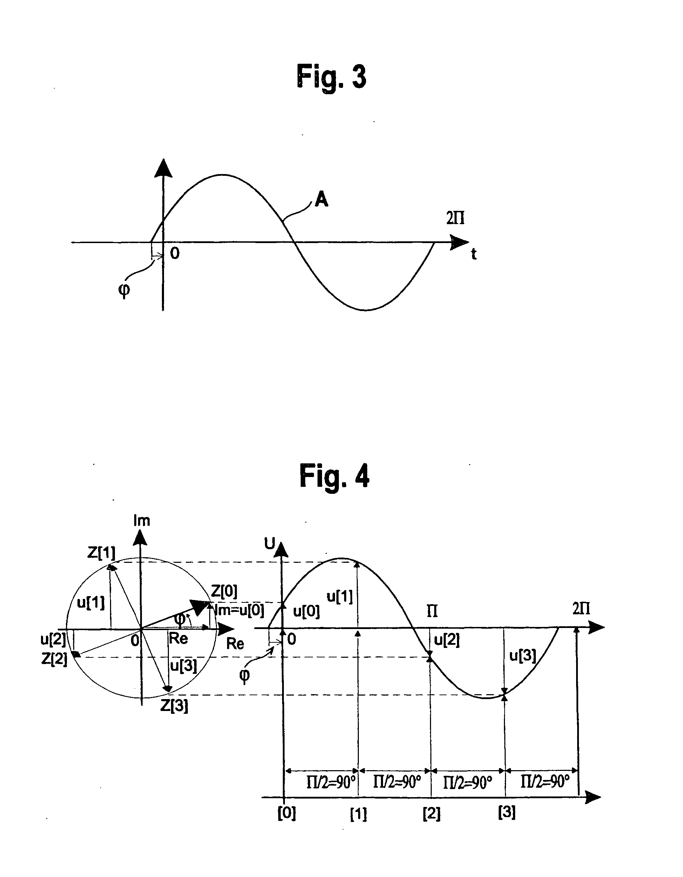

Die Figuren 3 und 4 zeigen das Auswerteverfahren zur Bestimmung der Phasenverschiebung $\varphi$ aus dem periodischen Ausgangssignal. Das in Figur 3 dargestellte, mit A bezeichnete Ausgangssignal weist im vorliegenden Fall einen sinusförmigen Verlauf auf.

Das Ausgangssignal A weist eine mit $\varphi$ bezeichnete Phasenverschiebung bezüglich einem Referenzpunkt auf, welcher beispielsweise durch eine Kalibrierungsmessung gegen ein Referenzziel vor Inbetriebnahme des optischen Sensors 1 festgelegt wird.

Durch Mehrfachabtastung des Amplitudenverlaufs des sinusförmigen Ausgangssignals A wird die Phasenverschiebung $\varphi$ des Ausgangssignals A ermittelt, wonach aus der Phasenverschiebung $\varphi$ der jeweilige Distanzwert errechnet und über den Ausgang 12 ausgegeben wird.

Figur 4 zeigt schematisch die Abtastung einer Periode des sinusförmigen Ausgangssignals A mit einer Abtastgruppe von vier Abtastwerten. Das rechte Diagramm zeigt den zeitlichen Verlauf des sinusförmigen Ausgangssignals A mit der Phasenverschiebung $\varphi$. Das linke Diagramm stellt das entsprechende Zeigerdiagramm für das Ausgangssignal A in der komplexen Ebene dar, wobei Im den Imaginärteil und Re den Realteil der entsprechenden komplexen Funktion für das Ausgangssignal A bildet. Da das sinusförmige Ausgangssignal A um die Phasenverschiebung $\varphi$ bezüglich des Nullpunkts als Bezugspunkt verschoben ist, ergibt sich durch dieselbe Phasenverschiebung $\varphi$ in der komplexen Funktion Z im Zeigerdiagramm gemäß der Beziehung

$$Z = |Z| \, e^{-j\varphi}$$

wobei $j = \sqrt{-1}$.

Dementsprechend ergibt sich die Phasenverschiebung $\varphi$ gemäß der Beziehung

$$\varphi = \text{arc tan} \, \frac{\text{im} (Z)}{\text{Re} (Z)}$$

Um aus dem sinusförmigen Verlauf des Ausgangssignals A die Phasenverschiebung $\varphi$ zu erhalten, wird diese Beziehung ausgenutzt und dementsprechend werden vier um jeweils 90° versetzte Abtastwerte definiert, mit welchen die Phasenverschiebung $\varphi$ ermittelt werden kann. Wie in Figur 4 (rechtes Diagramm) dargestellt sind die vier Abtastwerte durch die Amplitudenwerte des Ausgangssignals U(0), U(1), U(2), U(3) definiert, wobei diese Amplitudenwerte jeweils um 90° zueinander versetzt innerhalb einer Periode des Ausgangssignals A liegen.

Wie aus dem Vergleich mit dem Zeigerdiagramm in Figur 4 folgt, stellt die Differenz $D_1 = \frac{1}{2} (U(1) - U(3))$ den Realteil und die Differenz $D_2 = \frac{1}{2} (U(0) - U(2))$ den Imaginärteil der komplexen Funktion des Zeigerdiagramms dar.

Dementsprechend errechnet sich die Phasendifferenz $\varphi$ aus den Abtastwerten U(0), U(1), U(2), U(3) gemäß der Beziehung

$$\varphi = \text{arc tan} \, [\, (\, U(0) - U(2)\, ) \, / \, (\, U(1) - U(3)\, ) \,]$$

Die Ausbildung der Mehrfachabtastung des Ausgangssignals A wird durch eine Abtasteinheit definiert, welche im vorliegenden Fall aus dem Analog-Digital-Wandler 24 besteht. Die Abtastrate des Ausgangssignal A wird durch eine Abtastfrequenz $f_A$ vorgegeben. Diese Abtastfrequenz $f_A$ wird im Teiler 13 durch Teilung der Grundfrequenz $f_0$ generiert und in den Analog-Digital-Wandler 24 eingespeist. Da die Abtastfrequenz $f_A$ wie die übrigen Frequenzen $f_1$, $f_2$, $f_1'$, $f_2'$ aus der Grundfrequenz $f_0$ abgeleitet ist, besteht zwischen allen Frequenzen ein definiertes, konstantes Frequenzverhältnis.

Der Mikroprozessor 25 bildet nicht nur die Auswerteeinheit zur Bestimmung der Distanzwerte, sondern auch eine Triggereinheit zur Ansteuerung der Abtasteinheit sowie der Logikeinheiten, insbesondere der Teiler 13, 14.

Hierzu wird vor jeder Einzeldistanzmessung mit dem Frequenzpaar $f_1$, $f_1'$ oder $f_2$, $f_2'$ in dem Mikroprozessor 25 ein Startsignal S zur Aktivierung der Teiler 13, 14 und des Analog-Digital-Wandlers 24 generiert. Generell wird mit dem Startsignal S ein definierter zeitlicher Bezugspunkt sowohl für die Frequenzen $f_1$, $f_1'$ beziehungsweise $f_2$, $f_2'$ als auch für die Abtastfrequenz $f_A$ generiert. Da somit für die Abtastung des Ausgangssignals A des Empfängers 7 derselbe zeitliche Bezugspunkt wie für die Frequenzen $f_1$, $f_1'$, $f_2$, $f_2'$ zur Ansteuerung des Senders 5 beziehungsweise des Empfängers 7 erhalten wird, braucht für die einzelnen Distanzmessungen keine zusätzliche Referenzmessung mehr durchgeführt werden. Eine einmalige Kalibrierungsmessung zur Definition eines Referenzpunkts für die Phasenverschiebung $\varphi$ des Ausgangssignals A ist vielmehr ausreichend.

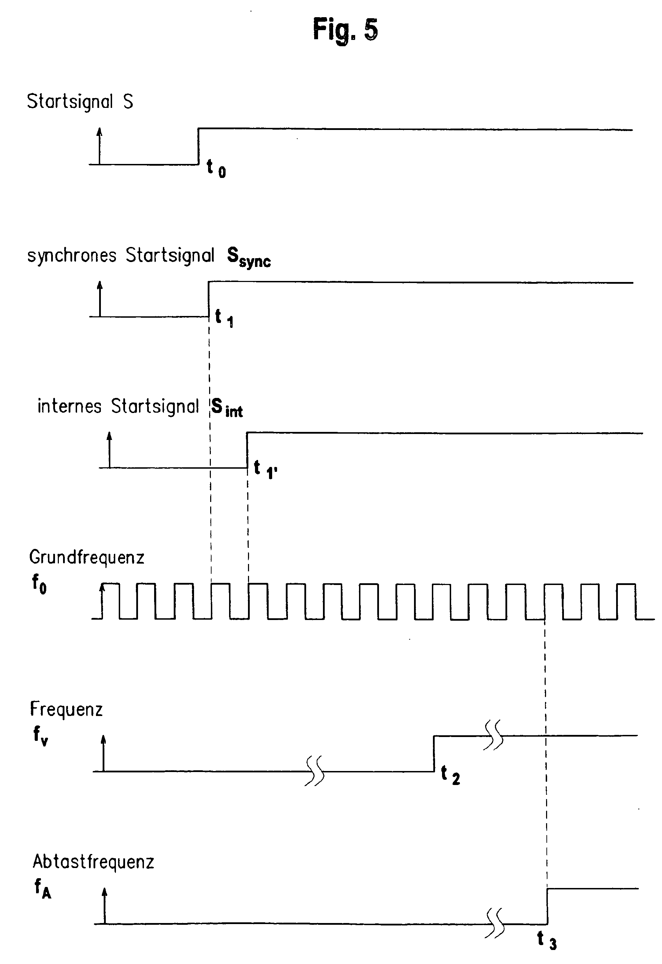

Im vorliegenden Ausführungsbeispiel wird das in Figur 1 mit S bezeichnete Startsignal dem ersten Teiler 13 zugeführt. Die darauf durchgeführte Aktivierung der einzelnen Komponenten der Logikeinheiten und der Abtasteinheiten ist in Figur 5 veranschaulicht.

Vor Generierung eines Startsignals S sind die Teiler 13, 14 und der Analog-Digital-Wandler 24 deaktiviert.

Das Startsignal S, das in dem Microcontroller generiert wird und zum Zeitpunkt $t_0$ in den Teiler 13 eingelesen wird, ist asynchron zur Grundfrequenz $f_0$ des Oszillators 15. In dem Teiler 13 wird in Abhängigkeit des asynchronen Startsignals S mit der auf das Startsignal S folgenden steigenden Flanke der Grundfrequenz $f_0$ ein synchrones Startsignal $S_{sync}$ generiert, mit welchem der Teiler 13 aktiviert wird.

Das synchrone Startsignal $S_{sync}$ wird, wie in Figur 2 dargestellt, als Aktivierungssignal von dem Teiler 13 in den Teiler 14 eingelesen. Dieses zur Grundfrequenz $f_0$ synchrone Startsignal könnte prinzipiell bereits als zeitlicher Bezugspunkt für die Frequenzpaare $f_1$, $f_1'$ bzw. $f_2$, $f_2'$ dienen. Um jedoch Fehler durch Bauteiltoleranzen und dergleichen auszuschließen wird, wie in Figur 5 dargestellt, in jedem Teiler 13, 14 mit der auf die Aktivierung des synchronen Startsignals $S_{sync}$ folgenden steigenden Flanke der Grundfrequenz $f_0$ jeweils ein internes Startsignal $S_{int}$ aktiviert.

In Figur 5 ist der Zeitpunkt der Aktivierung des internen Startsignals $S_{int}$ mit $t_1'$ bezeichnet. Dieser Zeitpunkt, der für beide Teiler 13, 14 identisch ist, da der jeweils aus der Grundfrequenz $f_0$ aktiviert ist, bildet den zeitlichen Bezugspunkt für die Frequenzpaare $f_1$, $f_1'$ und $f_2$, $f_2'$ sowie für die Abtastfrequenz $f_A$.

Wie aus Figur 5 ersichtlich, ist der Zeitpunkt $t_2$, bei welchem die Frequenz $f_v$ aktiviert und vom ersten Teiler 13 in den zweiten Teiler 14 eingelesen wird, um eine ganze Zahl von Perioden der Grundfrequenz $f_0$ gegenüber dem durch das interne Startsignal $S_{int}$ definierten zeitlichen Bezugspunkt $t_1'$ zeitlich verschoben. Dadurch ist ein bezüglich $t_1'$ definierter zeitlicher Bezug bei der Genenerung der bezüglich $f_1$ verschobenen Frequenz $f_1'$ und der bezüglich $f_2$ verschobenen Frequenz $f_2'$ gewährleistet.

Zeitlich versetzt hierzu, zu einem Zeitpunkt $t_3$ wird die im ersten Teiler 13 generierte Abtastfrequenz $f_A$ als weiteres Aktivierungssignal dem Analog-Digital-Wandler 24 zugeführt, wodurch dieser aktiviert ist. Auch die Aktivierung des Analog-Digital-Wandlers 24 weist einen definierten Bezug zum internen Startsignal $S_{int}$ auf, da der Zeitpunkt $t_3$ um eine ganze Anzahl von Periodendauern der Grundfrequenz $f_0$ gegenüber dem internen Startsignal $S_{int}$ (Zeitpunkt $t_1'$) verzögert ist.

Da auch der Zeitpunkt $t_3$ durch eine steigende Flanke der Grundfrequenz $f_0$ definiert ist, liegt der Zeitpunkt $t_3$ um eine ganze Anzahl von Perioden der Grundfrequenz $f_0$ versetzt zu dem Zeitpunkt $t_1'$, der die Aktivierung der Teiler 13, 14 definiert.

Dadurch ist eine Synchronisierung der Teiler 13, 14 und der Abtasteinheit und damit der Abtastung des Ausgangssignals des Empfängers 7 gegeben. Für die dann beispielsweise mit den Frequenzen $f_1$, $f_1'$ durchgeführte Einzelmessung ist dann ein definierter zeitlicher Bezug zur Abtastung des Ausgangssignals des Empfängers 7 gegeben. Da sämtliche Frequenzen $f_1$, $f_1'$ und $f_A$ auf das synchrone Startsignal S eindeutig bezogen sind, muss die so durchgeführte Einzelmessung nicht auf eine Referenzmessung bezogen sein.

Nach dieser Einzelmessung werden die Teiler 13, 14 und die Abtasteinheit vorzugsweise über den Microcontroller wieder deaktiviert.

Durch ein zweites Startsignal S werden diese Komponenten wieder aktiviert und synchronisiert, worauf eine zweite Einzelmessung mit den Frequenzen $f_2$, $f_2'$ erfolgt.

Aus den beiden Einzelmessungen erfolgt die Bestimmung eines aktuellen Distanzwerts.

Der Messtakt mit den vorgenannten Einzelmessungen wiederholt sich dann periodisch.

Bezugszeichenliste

| | |
|---|---|
| (1) | Optischer Sensor |
| (2) | Objekt |
| (3) | Gehäuse |
| (4) | Sendelichtstrahlen |
| (5) | Sender |
| (6) | Empfangslichtstrahlen |
| (7) | Empfänger |
| (8) | Sendeoptik |
| (9) | Empfangsoptik |
| (10) | Austrittsfenster |
| (11) | Signalverarbeitungseinheit |
| (12) | Ausgang |
| (13) | Teiler |
| (14) | Teiler |
| (15) | Oszillator |
| (16a) | Bandpassfilter |
| (16b) | Bandpassfilter |
| (17a) | Verstärker |
| (17b) | Verstärker |
| (18) | Summierglied |
| (19a) | Bandpassfilter |
| (19b) | Bandpassfilter |
| (20a) | Verstärker |
| (20b) | Verstärker |
| (21) | Summierglied |
| (22) | Bandpassfilter |
| (23) | Verstärker |
| (24) | Analog-Digital-Wandler |

(25)   Mikroprozessor

A   Ausgangssignal
$D_1$   Differenz Realteil
$D_2$   Differenz Imaginärteil
$f_0$   Grundfrequenz
$f_1$   Frequenz
$f_1'$   Frequenz
$f_2$   Frequenz
$f_2'$   Frequenz
$f_{10}$   Frequenz
$f_{10}'$   Frequenz
$f_{20}$   Frequenz
$f_{20}'$   Frequenz
$\Delta f$   Differenzfrequenz
$f_A$   Abtastfrequenz
$f_v$   Frequenz
Im   Imaginärteil
Re   Realteil
S   Startsignal
$t_0$   Zeitpunkt
$t_1$   Zeitpunkt
$t_2$   Zeitpunkt
U(0)   Amplitudenwert des Ausgangssignals
U(1)   Amplitudenwert des Ausgangssignals
U(2)   Amplitudenwert des Ausgangssignals
U(3)   Amplitudenwert des Ausgangssignals
Z   komplexe Funktion
$\varphi$   Phasenverschiebung

**Patentansprüche**

1.   Optischer Sensor (1) zur Bestimmung von Distanzen von Objekten (2) innerhalb eines Überwachungsbereichs, mit einem Sendelichtstrahlen (4) emittierenden Sender (5) und einer diesem zugeordneten ersten Logikeinheit zur Generierung wenigstens einer Frequenz $f_1'$, mit welcher die Sendelichtstrahlen (4) amplitudenmoduliert sind, mit einem Empfangslichtstrahlen (6) empfangenden Empfänger (7) und einer diesem zugeordneten zweiten Logikeinheit zur Generierung wenigstens einer zweiten Frequenz $f_1$, welche bezüglich der Frequenz $f_1'$ um eine Differenzfrequenz $\Delta f$ verschoben ist, und welche als Taktsignal dem Empfänger (7) zugeführt ist, so dass am Ausgang des Empfängers (7) durch Mischen der Frequenzen $f_1$ und $f_1'$ ein periodisches Ausgangssignal (A) mit der Differenzfrequenz $\Delta f$ und mit einer ein Maß für die Objektdistanz darstellenden Phasenverschiebung ($\varphi$) generiert wird, mit einer Abtasteinheit zur Abtastung des Ausgangssignals (A) mit einer Abtastfrequenz $f_A$, mit einer Auswerteeinheit zur Berechnung der Objektdistanz aus der durch Abtastung des Ausgangssignals (A) ermittelten Phasenverschiebung ($\varphi$), und mit einer Triggereinheit zur Generierung eines Startsignals (S) für die Logikeinheiten und die Abtasteinheiten, wobei mit dem Startsignal (S) ein gemeinsamer zeitlicher Bezugspunkt für die Frequenzen $f_A$, $f_1$ und $f_1'$ generiert wird.

2.   Optischer Sensor nach Anspruch 1, **dadurch gekennzeichnet, dass** die Triggereinheit von einem Mikroprozessor (25) gebildet ist.

3.   Optischer Sensor nach Anspruch 2, **dadurch gekennzeichnet, dass** der die Triggereinheit bildende Mikroprozessor (25) zugleich die Auswerteeinheit bildet.

4.   Optischer Sensor nach einem der Ansprüche 1 - 3, **dadurch gekennzeichnet, dass** die erste und zweite Logikeinheit jeweils einen Teiler (13, 14) aufweisen, mittels derer durch Teilen einer Grundfrequenz $f_0$ die Frequenzen $f_1$, $f_1'$ generiert werden.

5.   Optischer Sensor nach Anspruch 4, **dadurch gekennzeichnet, dass** die Grundfrequenz $f_0$ in einem Oszillator (15) generiert wird.

**6.** Optischer Sensor nach einem der Ansprüche 1 - 5, **dadurch gekennzeichnet, dass** die Abtasteinheit einen Analog-Digital-Wandler (24) aufweist, mittels dessen die Abtastwerte digitalisiert der Auswerteeinheit zuführbar sind.

**7.** Optischer Sensor nach einem der Ansprüche 1 - 6, **dadurch gekennzeichnet, dass** der Empfänger (7) von einer Avalanche-Photodiode gebildet ist.

**8.** Optischer Sensor nach Anspruch 7, **dadurch gekennzeichnet, dass** in dem Empfänger (7) die Mischung der Frequenzen $f_1$ und $f_1'$ erfolgt.

**9.** Optischer Sensor nach einem der Ansprüche 1 - 6, **dadurch gekennzeichnet, dass** mit dem Startsignal (S) eine der Logikeinheiten aktiviert wird, und dass in dieser zu einem gemeinsamen zeitlichen Bezugspunkt synchrone Aktivierungssignale generiert und der zweiten Logikeinheit sowie der Triggereinheit zugeführt werden.

**10.** Optischer Sensor nach Anspruch 7, **dadurch gekennzeichnet, dass** der zeitliche Bezugspunkt für die synchronen Aktivierungssignale durch die Grundfrequenz $f_0$ des Oszillators (15) vorgegeben ist.

**11.** Optischer Sensor nach einem der Ansprüche 9 oder 10, **dadurch gekennzeichnet, dass** der zeitliche Bezugspunkt durch eine auf das Startsignal (S) folgende Flanke der Grundfrequenz $f_0$ definiert ist.

**12.** Optischer Sensor nach einem der Ansprüche 9 - 11, **dadurch gekennzeichnet, dass** das Aktivierungssignal für die zweite Logikeinheit von einem synchronem Startsignal ($S_{sync}$) gebildet ist, welches mit einer auf das Startsignal (S) folgenden steigenden oder fallenden Flanke der Grundfrequenz aktiviert wird.

**13.** Optischer Sensor nach Anspruch 12, **dadurch gekennzeichnet, dass** zur Vorgabe des zeitlichen Bezugspunktes in den Logikeinheiten zeitgleich wird mit einer steigenden oder fallenden Flanke der Grundfrequenz $f_0$ nach Aktivierung des synchronen Startsignals ($S_{sync}$) ein internes Startsignal ($S_{int}$) generiert wird.

**14.** Optischer Sensor nach einem der Ansprüche 9 - 13, **dadurch gekennzeichnet, dass** das Aktivierungssignal für die Abtasteinheit von der durch Teilung der Frequenz $f_0$ in der ersten Logikeinheit generierten Abtastfrequenz $f_A$ gebildet ist.

**15.** Optischer Sensor nach einem der Ansprüche 1 - 14, **dadurch gekennzeichnet, dass** das Startsignal (S) zyklisch zur Durchführung jeweils einer Distanzmessung generiert wird.

**16.** Optischer Sensor nach einem der Ansprüche 1 - 14, **dadurch gekennzeichnet, dass** mit den Logikeinheiten neben dem Frequenzpaar $f_1$, $f_1'$ nacheinander weitere Frequenzpaare $f_2$, $f_2'$ generiert werden, und dass die Generierung jedes Frequenzpaares über ein separates Startsignal (S) eingeleitet wird.

**17.** Optischer Sensor nach einem der Ansprüche 1 - 16, **dadurch gekennzeichnet, dass** zur Definition eines Referenzpunkts, auf welche die Phasenverschiebung ($\varphi$) der Sendelichtstrahlen (4) und Empfangslichtstrahlen (6) bezogen ist, eine Kalibrierungsmessung durchführbar ist.

**18.** Optischer Sensor nach Anspruch 17, **dadurch gekennzeichnet, dass** zur Durchführung der Kalibrierungsmessung eine Referenzstrecke vorgesehen ist.

**Claims**

**1.** Optical sensor (1) for determining distances of objects (2) within a monitoring region, with a transmitter (5) emitting transmitted light beams (4) and a first logic unit associated therewith for generating at least one frequency $f_1'$, by which the transmitted light beams (4) are modulated in amplitude, with a receiver (7) receiving received light beams (6) and a second logic unit associated therewith for generating at least one second frequency $f_1$, which is displaced with respect to the frequency $f_1$, by a difference frequency $\Delta f$ and which is fed as a clock signal to the receiver (7) so that a periodic output signal (A) with a difference frequency $\Delta f$ and with a phase displacement ($\varphi$) representing a measure for the object distance is generated at the output of the receiver (7) by mixing the frequencies $f_1$ and $f_1$, with a scanning unit for scanning the output signal (A) at a scanning frequency $f_A$, with an evaluating unit for calculating the object distance from the phase displacement ($\varphi$) ascertained by scanning the output signal (A), and with a trigger unit for generating a start signal (S) for the logic units and the scanning units, wherein a common reference point in time for the frequencies $f_A$, $f_1$ and $f_1$, is generated by the start signal (S).

2. Optical sensor according to claim 1, **characterised in that** the trigger unit is formed by a microprocessor (25).

3. Optical sensor according to claim 2, **characterised in that** the microprocessor (25) forming the trigger unit at the same time forms the evaluating unit.

4. Optical sensor according to one of claims 1 to 3, **characterised in that** the first and second logic units each comprise a divider (13, 14), by means of which the frequencies $f_1$, $f_{1'}$ are generated by dividing a basic frequency $f_0$.

5. Optical sensor according to claim 4, **characterised in that** the basic frequency $f_0$ is generated in an oscillator (15).

6. Optical sensor according to one of claims 1 to 5, **characterised in that** the scanning unit comprises an analog-to-digital converter (24), by means of which the scanning values can be fed in digitalised form to the evaluating unit.

7. Optical sensor according to one of claims 1 to 6, **characterised in that** the receiver (7) is formed by an avalanche photodiode.

8. Optical sensor according to claim 7, **characterised in that** the mixing of the frequencies $f_1$ and $f_1$, is carried out in the receiver (7).

9. Optical sensor according to one of claims 1 to 6, **characterised in that** one of the logic units is activated by the start signal (S) and that synchronous activation signals are generated therein at a common reference point in time and are fed to the second logic unit as well as the trigger unit.

10. Optical sensor according to claim 7, **characterised in that** the reference point in time for the synchronous activation signals is predetermined by the basic frequency $f_0$ of the oscillator (15).

11. Optical sensor according to one of claims 9 and 10, **characterised in that** the reference point in time is defined by a flank of the basic frequency $f_0$ following the start signal (S).

12. Optical sensor according to one of claims 9 to 11, **characterised in that** the activation signal for the second logic unit is formed by a synchronous start signal ($S_{sync}$) which is activated by a rising or falling flank of the basic frequency following the start signal (S).

13. Optical sensor according to claim 12, **characterised in that** for presetting the reference point in time an internal start signal ($S_{int}$) is generated in the logic unit simultaneously with a rising or falling flank of the basic frequency $f_0$ after activation of the synchronous start signal ($S_{sync}$).

14. Optical sensor according to one of claims 9 to 13, **characterised in that** the activation signal for the scanning unit is formed from the scanning frequency $f_A$ generated by division of the frequency $f_0$ in the first logic unit.

15. Optical sensor according to one of claims 1 to 14, **characterised in that** the start signal (S) is generated cyclically for performance each time of a distance measurement.

16. Optical sensor according to one of claims 1 to 14, **characterised in that** apart from the frequency pair $f_1$, $f_1$, further frequency pairs $f_2$, $f_2$ are generated in succession by the logic units and that the generation of each frequency pair is initiated by way of a separate start signal (S).

17. Optical sensor according to one of claims 1 to 16, **characterised in that** for definition of a reference point to which the phase displacement ($\varphi$) of the transmitted light beams (4) and received light beams (6) is referred a calibrating measurement can be undertaken.

18. Optical sensor according to claim 17, **characterised in that** a reference path is provided for carrying out the calibrating measurement.

**Revendications**

1. Capteur optique (1) pour la détermination des distances d'objets (2) dans une zone de surveillance, avec un émetteur (5) émettant des rayons lumineux d'émission (4) et une première unité logique associée à celui-ci pour générer au moins une fréquence $f_1'$ avec laquelle les rayons lumineux d'émission (4) sont modulés en amplitude, avec un récepteur (7) recevant des rayons lumineux de réception (6) et une deuxième unité logique associée à celui-ci pour générer au moins une deuxième fréquence $f_1$ qui est décalée d'une fréquence différentielle $\Delta f$ par rapport à la fréquence $f_1'$ et qui est amenée au récepteur (7) en tant que signal d'horloge, de manière à générer à la sortie du récepteur (7), par mélange des fréquence $f_1$ et $f_1'$, un signal de sortie périodique (A) à la fréquence différentielle $\Delta f$ et avec un déphasage ($\varphi$) représentant une mesure de la distance de l'objet, avec une unité d'échantillonnage pour échantillonner le signal de sortie (A) avec une fréquence d'échantillonnage $f_A$, avec une unité d'évaluation pour calculer la distance de l'objet à partir du déphasage ($\varphi$) déterminé par échantillonnage du signal de sortie (A) et avec une unité de déclenchement pour générer un signal de démarrage (S) pour les unités logiques et les unités d'échantillonnage, un point de référence temporel commun pour les fréquence $f_A$, $f_1$ et $f_1'$ étant généré avec le signal de démarrage (S).

2. Capteur optique selon la revendication 1, **caractérisé par le fait que** l'unité de déclenchement est formée par un microprocesseur (25).

3. Capteur optique selon la revendication 2, **caractérisé par le fait que** le microprocesseur (25) formant l'unité de déclenchement forme en même temps l'unité d'évaluation.

4. Capteur optique selon l'une des revendications 1 à 3, **caractérisé par le fait que** la première et la deuxième unités logiques présentent chacune un diviseur (13, 14) au moyen duquel les fréquences $f_1$, $f_1'$ sont générées par division d'une fréquence de base $f_0$.

5. Capteur optique selon la revendication 4, **caractérisé par le fait que** la fréquence de base $f_0$ est générée dans un oscillateur (15).

6. Capteur optique selon l'une des revendications 1 à 5, **caractérisé par le fait que** l'unité d'échantillonnage présente un convertisseur analogique-numérique (24) au moyen duquel les valeurs d'échantillonnage numérisées sont amenées à l'unité d'évaluation.

7. Capteur optique selon l'une des revendications 1 à 6, **caractérisé par le fait que** le récepteur (7) est formé par une photodiode à avalanche.

8. Capteur optique selon la revendication 7, **caractérisé par le fait que** le mélange des fréquences $f_1$ et $f_1'$ est réalisé dans le récepteur (7).

9. Capteur optique selon l'une des revendications 1 à 6, **caractérisé par le fait que** l'on active une des unités logiques avec le signal de démarrage (S) et que l'on génère dans celle-ci, à un point de référence temporel commun, des signaux d'activation synchrones qui sont amenés à la deuxième unité logique ainsi qu'à l'unité de déclenchement.

10. Capteur optique selon la revendication 7, **caractérisé par le fait que** le point de référence temporel pour les signaux d'activation synchrones est défini par la fréquence de base $f_0$ de l'oscillateur (15).

11. Capteur optique selon l'une des revendications 9 ou 10, **caractérisé par le fait que** le point de référence temporel est défini par un flanc de la fréquence de base $f_0$ succédant au signal de démarrage (S).

12. Capteur optique selon l'une des revendications 9 à 11, **caractérisé par le fait que** le signal d'activation pour la deuxième unité logique est formé par un signal de démarrage synchrone ($S_{sync}$) qui est activé par un flanc montant ou descendant de la fréquence de base succédant au signal de démarrage (S).

13. Capteur optique selon la revendication 12, **caractérisé par le fait que** pour définir de façon synchrone le point de référence temporel dans les unités logiques, on génère un signal de démarrage interne ($S_{int}$) avec un flanc montant ou descendant de la fréquence de base $f_0$ après activation du signal de démarrage synchrone ($S_{sync}$).

14. Capteur optique selon l'une des revendications 9 à 13, **caractérisé par le fait que** le signal d'activation pour l'unité d'échantillonnage est formé par la fréquence d'échantillonnage $f_A$ générée par division de la fréquence $f_0$ dans la première unité logique.

**15.** Capteur optique selon l'une des revendications 1 à 14, **caractérisé par le fait que** le signal de démarrage (S) est généré cycliquement pour la réalisation de chaque fois une mesure de distance.

**16.** Capteur optique selon l'une des revendications 1 à 14, **caractérisé par le fait que** l'on génère avec les unités logiques, outre la paire de fréquences $f_1$, $f_1'$, successivement d'autres paires de fréquences $f_2$, $f_2'$ et que la génération de chaque paire de fréquences est déclenchée par un signal de démarrage (S) séparé.

**17.** Capteur optique selon l'une des revendications 1 à 16, **caractérisé par le fait que** l'on peut effectuer une mesure de calibrage pour définir un point de référence auquel se rapporte le déphasage ($\varphi$) des rayons lumineux d'émission (4) et des rayons lumineux de réception (6).

**18.** Capteur optique selon la revendication 17, **caractérisé par le fait qu'**il est prévu une distance de référence pour effectuer la mesure de calibrage.

# Fig. 1

## Fig. 2

# Fig. 3

# Fig. 4

# Fig. 5

Startsignal S

synchrones Startsignal $S_{sync}$

internes Startsignal $S_{int}$

Grundfrequenz
$f_0$

Frequenz
$f_v$

Abtastfrequenz
$f_A$